Europäisches Patentamt
European Patent Office
Office européen des brevets

(19) (11) Publication number: **0 336 486 A2**

(12) **EUROPEAN PATENT APPLICATION**

(21) Application number: **89200788.1**

(51) Int. Cl.⁴: **C08G 61/08**

(22) Date of filing: **28.03.89**

(30) Priority: **30.03.88 GB 8807590**

(43) Date of publication of application: **11.10.89 Bulletin 89/41**

(84) Designated Contracting States: **AT BE CH DE ES FR GB GR IT LI LU NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Sjardijn, Willem**
**Badhuisweg 3**
**NL-1031 CM Amsterdam(NL)**
Inventor: **Van Der Linden-Lemmers, Wilhelmina Johanna M.**
**Badhuisweg 3**
**1031 CM Amsterdam(NL)**

(74) Representative: **Aalbers, Onno et al**
**P.O. Box 302**
**NL-2501 CH The Hague(NL)**

# (54) Polymerization of norbornene derivatives and catalytic system suitable for use therein.

(57) A process for the polymerization of norbornene derivatives, which comprises contacting the monomer(s) with a catalytic system, obtainable by combining the following two components:

component 1 - a tungsten compound obtainable by combining a tungsten halide with a phenol compound which is not substituted with a bulky alkyl group at the positions ortho with respect to the hydroxyl group, and

component 2 - one or more compounds of the general formula:

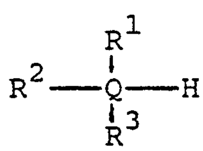

(I)

in which Q represents Sn or Si, in which $R^1$, $R^2$ and $R^3$ each represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

A catalyst system to be used for said process and copolymers obtained by this process.

EP 0 336 486 A2

## POLYMERIZATION OF NORBORNENE DERIVATIVES AND CATALYTIC SYSTEM SUITABLE FOR USE THEREIN

The invention relates to a process for the polymerization of norbornene derivatives and more particularly dicyclopentadiene containing mixtures. The invention further relates to a catalytic system suitable for use in said process.

US patent No. 4,020,254 discloses a process for ring opening polymerization of cycloolefins by the use of a catalyst comprising:

(A) at least one transition metal salt selected from the group consisting of tungsten halides and tungsten oxyhalides,

(B) at least one compound selected from the group consisting of dialkylaluminium halides, alkylaluminium sesquihalides and alkylaluminium dihalides, and

(C) at least one alkoxysilane.

More particularly compounds are proposed of the formula $RO\text{-}SiR'_3$, wherein R is $CH_3$- or $Y\text{-}CH_2\text{-}CH_2$-, wherein Y is hydrogen, halogen, nitrile, alkyl containing from 1 to 4 carbon atoms or alkoxy containing from 1 to 4 carbon atoms and wherein R′ is a methyl or ethyl radical and wherein the molar ratios of A/B/C is within the range of 1/0.5-10/0.5-3.

US patent No. 4,481,344 discloses a process using a two part metathesis catalyst system for preparation of a thermoset polymer of dicyclopentadiene units wherein a halogen containing hydrocarbyl additive has been incorporated.

The hydrocarbyl additive is included in one of a plurality of reactant streams containing dicyclopentadiene, and contains at least one trihalogen substituted carbon atom or at least one activated halogen atom. More particularly the halogen containing hydrocarbyl additive is selected from the group consisting of chloroform, carbon tetrachloride, 1,1,1-trichloroethane, hexachloropropane, hexachloroacetone, ethyl trichloroacetate, alpha,alpha,alpha-trichlorotoluene, allyl chloride, allyl bromide, benzyl chloride and hexachlorocyclopentadiene.

The tungsten catalyst is made soluble in the monomer suspension stream by the addition of a small amount of an alcoholic or a phenolic compound.

As suitable phenolic compounds are proposed phenol, alkyl-phenols and halogen containing phenols, with tert-butyl phenol, tert-octyl phenol and nonyl phenol being most preferred.

British patent application No. 2,005,280 discloses a method for the preparation of random copolymers of dicyclopentadiene and a compound selected from cyclopentene, cyclooctene, 1,5-cyclooctadiene and 1,5,9-cyclododecatriene by the use of a catalyst system comprising:

(A) tungsten hexachloride;

(B) an organosilicon compound of the general formula $R_{4-n}\ Si(Y)_n$ in which the R substituents are selected from alkyl, cycloalkyl, aryl and aralkyl radicals, and Y represents either a hydroxy group or a vinyl radical and wherein n is 1 or 2;

(C) a di-n-alkylether or a phenyl-n-alkylether; and

(D) an organo tin compound represented by the general formula

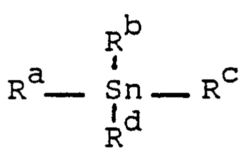

in which $R^a$, $R^b$, $R^c$ and $R^d$ are selected from n-alkyl, phenyl and vinyl radicals.

Japanese patent application No. 53103000 discloses a process for the preparation of ring-opened polymers by ring-opening polymerization of norbornene-type derivatives containing polar or aromatic hydrocarbon groups and/or norbornadiene derivatives and cycloolefin compounds optionally in the presence of unsaturated polymers containing C=C bonds, using a catalyst system obtained from (A) organic metal compounds containing metals inter alia selected from Group IVB or IVA metals, and (B) a reaction product obtained by the reaction of (1) the reaction product formed by reaction of oxide of tungsten and/or molybdenum and Lewis acid and (2) silanol compound of formula $R_{4-n}\ Si(OH)_n$, wherein R is halogen, alkyl

having less than 15 carbon atoms, aryl or alkoxy, and wherein n = 1, 2 or 3.

European Patent Specification No. 0084888 concerns a process for the manufacture of a thermoset homopolymer by combining a first reactant stream containing the activator of a metathesis-catalyst system and a second reactant stream containing the catalyst of the metathesis-catalyst system, and at least one of which streams contains dicyclopentadiene to form a reaction mixture and then, immediately injecting the reaction mixture into a mould where polymerization occurs. The catalyst may be a tungsten containing compound which can be solubilized by the addition of a small amount of a phenolic compound. Suitable phenolic compounds include phenol, alkylphenols and halogenated phenols, with tert-butylphenol, tert-octylphenol and nonylphenol being most preferred. The starting dicyclopentadiene for this known process must be essentially pure.

European Patent Application No. 0222432 concerns a process for the bulk polymerization of dicyclopenta diene by contacting it with a catalyst system comprising (i) a tungsten compound containing a phenyl group carrying a bulky alkyl group and (ii) an organic tin compound containing one hydrogen atom bound to the tin atom. This known process has as advantages that the starting dicyclopentadiene need not be essentially pure, and that the catalyst is more stable and less sensitive to oxygen.

These processes described hereinbefore can be applied for a reaction injection moulding (RIM) process.

Such a process involves in principle mixing of two or more low viscosity streams of components of the catalyst system e.g. dissolved in the monomer, and injecting the combined streams into a mould where they form a solid infusable mass.

One requirement to be met for a RIM process is using a catalytic system that enables a high polymerization rate. Moreover it is desirable that the polymerization starts at a temperature in the range of from 25 to 90 °C, so that the compounds of the catalytic system can be mixed at ambient temperature, and that after slight heating of the mixture the exothermic polymerization is initiated.

Due to the modern requirements of such RIM processes there is still a strong need to further enhance the rate of polymerization of dicyclopentadiene alone or combinations thereof with other related cycloalkadiene comonomers, such as norbornene derivatives.

Therefore it is an object of the present invention to enhance the rate of polymerization of dicyclopentadiene, optionally blended with other related cycloalkadiene or cycloalkene comonomers, e.g. norbornene derivatives by using a more active catalytic system.

As a result of extensive research and experimentation there was surprisingly found a process for the polymerization of norbornene derivatives and more particularly dicyclopentadiene, optionally blended with other related cycloalkadiene comonomers, which comprises contacting the monomer(s) with a catalytic system, obtainable by combining the following two components:

component 1 - a tungsten compound obtainable by combining a tungsten halide with an optionally substituted phenol which is not substituted with a bulky alkyl group at the positions ortho with respect to the hydroxyl group, and

component 2 - one or more compounds of the general formula:

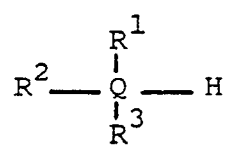

(I)

in which Q represents Sn or Si, in which $R^1$ , $R^2$ and $R^3$ each represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

Polymerization of dicyclopentadiene includes co-polymerization thereof with less than 50% by weight of another monomer, calculated on dicyclopentadiene.

The tungsten halide for the preparation of component 1 may be a bromide, but is preferably a chloride and more preferably tungstenhexachloride. Another example of a tungstenchloride is tungstenoxytetrachloride ($WOCl_4$).

The phenol should not be substituted with a bulky alkyl group at the positions ortho with respect to the hydroxyl group, that is to say, the carbon atom attached to the aromatic nucleus of the phenol should not be tertiary or quaternary. Preferably, the phenol is a monocyclic halophenol in which the halogen atoms are

attached to the aromatic nucleus. Among the halophenols fluorophenols are preferred, but chlorophenols and bromophenols may be used. Very high reaction rates are obtained when polyfluorophenols are used. The highest rates of polymerization are obtained when the polyfluorophenol carries four or five fluorine atoms. Examples of such phenols are 2,3,4,5-tetrafluorophenol, 2,4,5,6-tetrafluorophenol and 2,3,5,6-tetrafluorophenol. Very good results have been obtained with 2,3,5,6-tetrafluorophenol and pentafluorophenol. An advantage of the use of such very active catalytic systems is that only very little thereof need be used.

Other examples of suitable halophenols are 2-fluorophenol, 3-fluorophenol, 4-fluorophenol, 2,3-difluorophenol, 2,4-difluorophenol, 2,5-difluorophenol, 2,6-difluorophenol, 3,4-difluorophenol, 3,5-difluorophenol, 2,3,4-trifluorophenol, 2,3,5-trifluorophenol, 2,3,6-trifluorophenol and 3,4,5-trifluorophenol, 2,4,5-trifluorophenol and 2,4,6-trifluorophenol, and the bromo- and chlorophenols, corresponding to each of these fifteen fluorophenols. Further examples of suitable phenols are phenol, o-cresol, m-cresol, p-cresol, 2-ethylphenol, 3-ethylphenol, 4-ethylphenol, 2-propylphenol, 3-propylphenol, 4-propylphenol, 3-isopropylphenol, 4-isopropylphenol, 2-butylphenol, 3-butylphenol, 4-butylphenol, 3,4-diisopropylphenol, 3,4-diisobutylphenol and 3,4-di-tert-butylphenol.

Very high polymerization rates are also obtained when the phenol is a monocyclic phenol having a trihalomethyl substituent attached to the aromatic nucleus. The trihalomethyl substituent is preferably a trifluoromethyl group, but may be a trichloromethyl or tribromomethyl group. Very good results have been obtained with 3-trifluoromethylphenol. Other examples of such phenols are 2-trichloromethylphenol, 4-trifluoromethylphenol, 2-trifluoromethylphenol, 3-chlorodifluoromethylphenol, 3-dichlorofluoromethylphenol and 3-tribromomethylphenol.

A mixture of optionally substituted phenols may be used, which phenols are not substituted with a bulky alkyl group at the positions ortho with respect to the hydroxyl group, for example of 4-fluorophenol and p-cresol.

Component 1 may be prepared in the presence of a suitable solvent. Examples of such solvents are cyclopentane, cyclohexane, benzene, toluene, o-, m- and p-xylene, chlorobenzene and 1,2-dichlorobenzene. Suitably, a molar ratio phenol to tungsten in the range of from 1:1 to 10:1 and preferably 1:1 to 6:1 is used and more preferably 3:2 to 3:1. The preparation of component 1 may take place by suspending a tungsten halide in the solvent and adding the phenol to the suspension formed, stirring the reaction mixture and blowing a stream of a dry inert gas, for example nitrogen, through the mixture to remove the hydrogen halide which is formed.

Component 2 is preferably a tin compound of the general formula I in which $R^1$ , $R^2$ and $R^3$ each represent an alkyl group having in the range of from 1 to 20 and, in particular, 1 to 10 carbon atoms. Tributyltinhydride is most preferred. Other examples of suitable tin compounds are tripropyltinhydride, tripentyltinhydride, methyldicyclohexyltinhydride, cyclopentyldimethyltinhydride, trioctyltinhydride, triphenyltinhydride and phenyldimethyltinhydride. Examples of substituents in $R^1$ , $R^2$ and $R^3$ are alkoxy groups having in the range of from 1 to 20 carbon atoms and chlorine and fluorine atoms.

According to the most preferred embodiment of the present invention, a catalytic system is used, obtainable by combining the following two component:

component 1′ - a tungsten compound obtainable by combining a tungsten halide with a para-trihalomethylphenol, the phenyl nucleus optionally being substituted by an alkyl group or halogen atom, and

component 2′ - one or more compounds of the general formula:

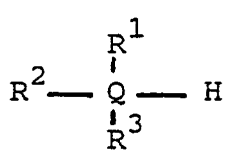

(II)

in which Q represents Sn or Si, in which $R^1$ , $R^2$ and $R^3$ may represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

It will be appreciated that compounds wherein Q represents Sn and compounds wherein Q represents Si alone, or mixtures of both compounds preferably may be used for the polymerization process of the present invention in combination with the para-trihalomethylphenol derivatives.

Examples of the para-trihalomethylphenol derivatives to be used for said most preferred embodiment

are ortho-chloro-para-trifluoromethylphenol, ortho-methyl-paratrichloromethylphenol, ortho-methyl-para-trifluoromethylphenol, para-tribromomethylphenol, para-trichloromethylphenol or para- trifluoromethylphenol, the latter being most preferred. Also mixtures of the beforementioned para-trihalomethylphenols may be used.

It will be appreciated that the phenol compounds to be used have to bear a trihalomethyl substituent on the para position in order to reach the highest polymerization rates. Moreover it was surprisingly found as a further advantage of the use of the presently proposed phenol compounds, that the catalyst component 1 appeared to be very storage stable in the norbornene derivative to be polymerized and more particularly in dicyclopentadiene and/or mixtures with other cycloalkadiene or cycloalkene comonomers, that the catalyst component 1′ could be activated with a silane compound according to formula II instead of a tin hydride, and that the starting mixture containing such silicon containing activator behaves as a thin liquid at ambient temperature, whereas polymerization only occurs upon heating. This means an advantageous characteristic over the prior art processes.

Component 1 may be prepared in the presence of a suitable solvent. Examples of such solvents are cyclopentane, cyclohexane, benzene, toluene, o-, m- and p-xylenes, chlorobenzene and 1,2-dichlorobenzene.

However according to a more preferred embodiment dicyclopentadiene is used as solvent for the complete component 1 and most preferably the co-monomer mixtures containing dicyclopentadiene to be polymerized are used as solvent for this purpose.

Component 2′ is preferably a compound of the general formula II, in which at least two of the symbols $R^1$ , $R^2$ and $R^3$ represent an alkyl group having in the range of from 1 to 10 carbon atoms and more preferably 2-4 carbon atoms or phenyl, when Q represents Si, whereas symbols $R^1$ , $R^2$ and $R^3$ represent an alkyl group as hereinbefore defined or a phenyl group, when Q represents Sn. Tributyltinhydride, triethylsilane and/or diphenylsilane are most preferred.

Other examples of suitable activator components are tripropyltinhydride, tripentyltinhydride, methyldicyclohexyltinhydride, cyclopentyldimethyltinhydride, trioctyltinhydride, triphenyltinhydride, phenyldimethyltinhydride, dibutylsilane, triethylsilane, trihexylsilane, dipropylsilane, dipentylsilane, dicyclohexylsilane, dicyclopentylsilane and dioctylsilane. Examples of substituents of $R^1$ , $R^2$ and $R^3$ are alkoxy groups having in the range of from 1 to 20 carbon atoms and chlorine or fluorine atoms.

The process according to the present invention can be carried out at a molar ratio between the tungsten compound and the cycloalkadiene monomer and a molar ratio tin and/or silicon compound of the general formula I to tungsten, which may vary within wide ranges. Preferably, the former ratio is in the range of from 1:20,000 to 1:100 and in particular 1:1,000 to 1:10,000 and the latter ratio in the range of from 15:1 to 1:1 and in particular 12:1 to 3:1.

It will be appreciated that the norbornene derivatives e.g. dicyclopentadiene or dicyclopentadiene containing mixtures with other comonomers can be used for the process of the present invention.

More particularly, a technical grade of dicyclopentadiene may be used which may contain impurities distilling below a top temperature of 100 °C at a pressure of 12,400 ± 400 Pa. Such impurities usually form azeotropic mixtures with dicyclopentadiene. The technical grade may contain, for example, at least 83% by weight of pure dicyclopentadiene. An advantage of the use of such technical grades is that they are usually liquid at ambient temperature, say at 20 °C; pure endo-dicyclopentadiene has a melting point of 32 °C. Commercially, dicyclopentadiene is usually available in the endo form, but, if desired, the exo form may be used, or mixtures of the endo and exo form. The technical grade of DCPD is preferably obtained by dimerization of a technical grade of cyclopentadiene, which, in turn, is obtained by fractional distillation of the products obtained by cracking of hydrocarbons, for example a naphtha fraction, in the presence of steam.

Generally, the polymerization takes place in bulk, but components 1 and 2 may be dissolved in a small amount of solvent, such as toluene. It is preferred to use, however, dicyclopentadiene, optionally blended with co-monomers, as a solvent for at least one of the two components. For the tin compounds and silicon compounds and especially those to be used in component 2′, as specified hereinbefore, no solvent at all may also suffice, since these compounds are usually a liquid at ambient temperature.

A preferred method for the polymerization of a dicyclopentadiene containing mixture is to allow to contact a stream of component 1 with a stream of component 2 with each other, whereby at least one of the streams has been admixed with the dicyclopentadiene containing mixture, prior to the polymerization, and to polymerize the dicyclopentadiene containing mixture. For example, it is possible to dissolve component 1 in dicyclopentadiene and either to dissolve component 2 in dicyclopentadiene or in another solvent or to use the activator without any solvent. After both streams have contacted with each other, the resulting mixture is preferably injected or poured into a mould where polymerization of the dicyclopentadiene

containing mixture takes place.

Component 1 and component 2 and more particularly the components $1'$ and $2'$ may be stored in a dicyclopentadiene containing mixture for some time, provided that the dicyclopentadiene containing mixture contains not more than a few parts per million (ppm) by weight of water. Component 2 and more particularly the component $2'$ is storable in the dicyclopentadiene containing mixture for one to two months without losing its activity.

With the term "dicyclopentadiene containing mixture" are meant mixtures which are containing pure endo- or exo-dicyclopentadiene in addition to isomers and structurally related monomers.

The process according to the present invention may be carried out in the presence of auxiliary materials, for example fillers, fibres, anti-oxidants, tougheners, stabilizers, pigments and plasticizers.

The catalytic system used in the process is specifically of interest for reaction injection moulding or casting. Because of the low viscosity of the dicyclopentadiene containing mixture/catalyst system mixture, the polymerization is very suitable for large castings with intricate moulds. The process is usually carried out at an average polymerization temperature in the range of from 50 °C to 200 °C. It is a favourable feature of the present invention that the components 1 and 2 and more particularly the components $1'$ and $2'$ of the catalytic system are very stable.

The product obtained by the process according to the invention may be subjected to a heat-treatment at a temperature in the range of from 200 °C to 300 °C for about one hour or longer. By this heat-treatment the glass transition temperature of the polymer is increased from a starting value of about 125 °C to about 160 °C, which renders the polymer more useful.

The process according to the present invention allows quantitative polymerization, e.g. the polydicyclopentadiene being free from dicyclopentadiene monomer. For this reason e.g. the polydicyclopentadiene is free from odour and can be used for a large number of applications, for example for (a) structural composites, for example in the automotive industry or building industry, and (b) application in the electrical industry, for example in printed circuit boards.

The invention further provides a novel catalytic system suitable for use in the process as hereinbefore described which forms another feature of the present invention and which system may be prepared by combining the following two components:-

component 1 - a tungsten compound obtainable by combining a tungsten halide with an optionally substituted phenol which is not substituted with a bulky alkyl group at the positions ortho with respect to the hydroxyl group, and

component 2 - one or more compounds of the general formula:

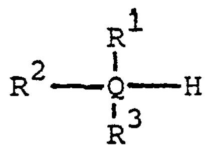

(I)

in which Q represents Sn or Si, in which $R^1$, $R^2$ and $R^3$ each represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

It will be apreciated that the most preferred embodiment of said novel catalytic system may be prepared by combining:

component $1'$ - a tungsten compound obtainable by combining a tungsten halide with a para-trihalomethylphenol, the phenyl nucleus optionally being substituted by an alkyl group or halogen atom, and

component $2'$ - one or more compounds of the general formula:

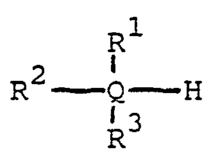

(II)

in which Q represents Sn or Si, in which $R^1$, $R^2$ and $R^3$ may represent an optionally substituted alkyl group having in the range of from 1 to 20 carbon atoms, an optionally substituted cycloalkyl group having in the range of from 3 to 6 carbon atoms, an optionally substituted cycloalkyl group having in the

range of from 3 to 6 carbon atoms in the cycloalkyl ring or an optionally substituted phenyl group and in which $R^1$ and $R^2$ each may also represent hydrogen.

The following Examples further illustrate the invention. The Examples are according to the invention, the Comparative Experiments are not.

The starting dicyclopentadiene (DCPD) was a technical grade having an initial boiling point of 90 °C and of which 3.0% was distilled over at a temperature of 100 °C and a pressure of 12,000 Pa, the distillation being carried out in a column having 14 theoretical trays. The DCPD was dried by contacting with a 4A molecular sieve until it contained less than 1 part per million by weight of water. The DCPD contained (% by weight)

- 3.5% isopropenyl-2-norbornene,
- 1.1% 5-cis and trans-1-propenyl-2-norbornene, and
- 0.7% 5-methyltetrahydroindene.

For each of the Examples and the Comparative Experiments the preparation of the catalytic systems is described hereinafter.

## Examples 1 and 2

$WCl_6$ (5.0 mmol) was suspended in dried toluene (40 ml) under a dry nitrogen atmosphere. p-Tert-butylphenol (5.5 mmol) in toluene (10 ml) was added over a period of 5 min at ambient temperature. After completion of the reaction a homogeneous solution was obtained to which benzonitrile (0.006 mmol) was added to suppress cationic polymerization and make the catalyst component storage stable in dicyclopentadiene.

## Comparative Experiment A

$WCl_6$ (10.0 mmol) was weighed in a dried serum cap bottle and dissolved in dried toluene (100 ml) at 95 °C under a dry nitrogen blanket. Dried 2,6-diisopropylphenol (20.0 mmol) was added in 5 minutes. The evolved HCl was collected in an excess of an aqueous sodium hydroxide solution. The reaction mixture was kept for 4 hours at 95 °C. The catalyst was isolated by evaporation of the solvent.

## Example 3 - Use of pentafluorophenol

$WCl_6$ (1.73 mmol) was suspended in dried cyclopentane (10 ml) under a dry nitrogen blanket. Pentafluorophenol (3.5 mmol) in cyclopentane (10 ml) was added at ambient temperature. After completion of the reaction the catalyst was isolated by evaporation of the solvent.

## Example 4 - Use of 2,3,5,6-tetrafluorophenol

$WCl_6$ (1.73 mmol) was suspended in dried cyclopentane (10 ml) at ambient temperature under a dry nitrogen blanket. 2,3,5,6-Tetrafluorophenol (3.5 mmol) in cyclopentane (10 ml) was added. After completion of the reaction the catalyst was isolated by evaporation of the solvent.

## Example 5 - Use of 2-fluorophenol

$WCl_6$ (1.73 mmol) was suspended in dried cyclopentane (10 ml) at ambient temperature under a dry nitrogen blanket. 2-Fluorophenol (3.5 mmol) in cyclopentane (10 ml) was added. After completion of the reaction the catalyst was isolated by evaporation of the solvent.

## Example 6 - Use of 4-fluorophenol

$WCl_6$ (1.73 mmol) was suspended in dried cyclopentane (10 ml) under a dry nitrogen blanket. 4-Fluorophenol (3.5 mmol) in cyclopentane (10 ml) was added at ambient temperature. After completion of the reaction the catalyst was isolated by evaporation of the solvent.

Example 7 - Use of phenol

$WCl_6$ (1.73 mmol) was suspended in dried cyclopentane (10 ml) under a dry nitrogen blanket. Phenol (3.5 mmol) in cyclopentane (10 ml) was added at ambient temperature. After completion of the reaction the catalyst was isolated by evaporation of the solvent.

Example 8 - Use of p-tert-butylphenol

$WCl_6$ (1.73 mmol) was suspended in dried cyclopentane (10 ml) under a dry nitrogen blanket. P-tert-butylphenol (3.5 mmol) in cyclopentane (10 ml) was added at ambient temperature. After completion of the reaction the catalyst was isolated by evaporation of the solvent.

Comparative Experiment B - Use of 2,6-diisopropylphenol

$WCl_6$ (1.73 mmol) was suspended in dried cyclopentane (10 ml) under a dry nitrogen blanket. 2,6-Diisopropylphenol (3.5 mmol) in cyclopentane (10 ml) was added at ambient temperature. After completion of the reaction the catalyst was isolated by evaporation of the solvent.

Description of the polymerization experiments

In each experiment a 30 ml serum cap bottle was charged with DCPD (10 ml) and catalyst prepared as described hereinafter, using a molar ratio of DCPD to tungsten of 4000, except in Example 2 where this molar ratio was 2000. Then, tributyltinhydride was added in such an amount that the molar ratio tin to tungsten was 9. For each experiment the time was measured which was required to obtain the maximum temperature in the bottle, this time being a measure for the activity of the catalytic system used in that experiment.

The results are presented in Table 1 hereinafter.

TABLE 1

| Example | Comp. Exp. | Time required to obtain the max. temperature, min | Maximum temperature, °C |
|---|---|---|---|
| 1[1)] | | 3 | 170 |
| 2[1)] | | 0.3 | 170 |
| | A[2)] | 5 | 180 |
| 3[1)] | | 0.3 | 175 |
| 4[1)] | | 1 | 175 |
| 5[2)] | | 2.5 | 190 |
| 6[2)] | | 3.5 | 175 |
| 7[2)] | | 3.5 | 180 |
| 8[2)] | | 3 | 180 |
| | B[2)] | 8.5 | 190 |

1) in these experiments the polymerization started at 20 °C and, therefore, the bottle was kept in air of this temperature.
2) in these experiments the polmerization did not start at 20 °C; therefore, the bottle was kept in an oil bath having a temperature of 90 °C.

In Example 1 where p-tert-butylphenol was used and where heating the bottle was not necessary, a considerably shorter time was observed than in Comparative Experiment A where 2,6-diisopropylphenol

(carrying a bulky substituent) was used and where the bottle had to be heated.

Comparison of Examples 1 and 2 shows that doubling the concentration of the catalytic system, viz. decreasing the molar ratio of DCPD to W from 4000 to 2000, resulted in a reduction of the time to only 0.3 min.

In Examples 3 and 4 where pentafluorophenol and 2,3,5,6-tetrafluorophenol were used, respectively, heating of the bottle was not necessary and very short reaction times were observed.

In Examples 5, 6, 7 and 8, where 2-fluorophenol, 4-fluorophenol, phenol and p-tert-butylphenol were used, respectively, considerably shorter reaction times were observed than in Comparative Expirement B, where 2,6-diisopropylphenol was used.

Some typical properties of the polydicyclopentadiene obtained according to Examples 1 and 2 are presented in Table 2.

TABLE 2

| Property | Test Method | Unit | Value |
|---|---|---|---|
| Flexural properties | ASTM D 790 | | |
| Modulus | | GPa | 1.85 |
| Strength | | MPa | 75 |
| Compressive properties | ISOR 604 | | |
| Modulus | | GPa | 1.6 |
| Strength | | MPa | 72 |
| Vicat softening temp. | ISO 306, B | °C | 140 |
| Izod impact strength | ASTM D 256 (notched) | $kJ.m^{-2}$ | 5 |
| Glass transition temp. | DSC | °C | 140 |

<u>Examples 9, 10 and 11</u>

Example 4 was repeated with the exception that 2,3,5,6-tetrafluorophenol (3.5 mmol) was replaced with another phenol (3.5 mmol). Table 3 hereinafter states which phenols were used, the time required to obtain the maximum temperature and the maximum temperature.

TABLE 3

| Example | Phenol | Time required to obtain the max. temperature, min | Maximum temp., °C |
|---|---|---|---|
| 9[2)] | 2-chlorophenol | 2.5 | 190 |
| 10[1)] | pentachlorophenol | 2 | 180 |
| 11[1)] | 3-trifluoromethylphenol | 3 | 180 |
| For 1) and 2) see Table 1. | | | |

Comparison of Example 3 with Example 10 shows; that by using pentafluorophenol instead of pentachlorophenol a considerably shorter reaction time is obtained. Examples 9 and 11 show that by replacing pentachlorophenol used in Example 10 with 2-chlorophenol and 3-trifluoromethylphenol, respectively, longer reaction times are obtained, but still shorter than with 2,6-diisopropylphenol in Comparative Experiment B.

<u>Example 12</u>

$WCl_6$ (1.73 mmol) was suspended in dried cyclopentane (50 ml) under a dry nitrogen blanket. p-$CF_3$-phenol (3.5 mmol) in cyclopentane (20 ml) was added. After completion of the reaction the catalyst was isolated by evaporation of the solvent.

Comparative Experiment C

$WCl_6$ (1.73 mmol) was suspended in dried cyclopentane (5 ml) at ambient temperature under a dry nitrogen blanket. 2,3,5,6-Tetrafluorophenol (3.5 mmol) in cyclopentane (25 ml) was added. After completion of the reaction the catalyst was isolated by evaporation of the solvent.

Comparative Experiment D

$WCl_6$ (3.67 mmol) was suspended in dried cyclopentane (30 ml) under a dry nitrogen blanket. 2,6-Diisopropylphenol (7.33 mmol) in cyclopentane (20 ml) was added at ambient temperature. After completion of the reaction the catalyst was isolated by evaporation.

Example 13

A 30 ml serum cap bottle was charged with the catalyst of Example 1 (22 mg) and dried DCPD (10 ml) under a dry nitrogen blanket. Subsequently tributyltinhydride (80 mg) was added, resulting in an exothermic polymerization. A maximum temperature of 170 °C was reached 2 minutes after introduction of the cocatalyst.

Example 14

A 30 ml serum cap bottle was charged with the catalyst of Example 1 (22 mg) and dried DCPD (10 ml) under a dry nitrogen blanket. This mixture was stored for 7 days. Then tributyltinhydride (80 mg) was added, resulting in an exothermic polymerization. 2 Minutes after introduction of the cocatalyst a maximum temperature of 170 °C was recorded.

Comparative Experiment E

A 30 ml serum cap bottle was charged with the catalyst of Comparative Experiment 1 (11 mg) and dried DCPD (10 ml) under a dry nitrogen blanket. After 7 days storage tributyltinhydride (40 mg) was added. Nothing happened at ambient temperature. After 15 minutes the mixture was heated to 90 °C, which resulted in a weak exotherm. After 10 minutes a maximum temperature of 135 °C was recorded.

When the cocatalyst was added directly to the catalyst solution in DCPD a maximum temperature of 180 °C was reached after 1 minute.

Example 15

A 30 ml serum cap bottle was charged with the catalyst of Example 1 (22 mg) and dried DCPD (10 ml) under a dry nitrogen blanket. Subsequently diphenylsilane (60 mg) was added. The reactive mixture was placed in an oil bath of 90 °C resulting in an exothermic polymerization. After 5.5 minutes a maximum temperature of 210 °C was recorded.

Comparative Experiment F

A 30 ml serum cap bottle was charged with the catalyst of Comparative Experiment 2 (70 mg) and dried DCPD (10 ml) under a dry nitrogen blanket. Subsequently diphenylsilane (150 mg) was added. The reactive mixture was placed in an oil bath of 90 °C. After 33 minutes a maximum temperature of 190 °C was recorded. With less catalyst (11 mg) and cocatalyst (25 mg) no exotherm was observed although the mixture was kept at 90 °C for 1.5 hours. Further heating to 125 °C still resulted in an exothermic polymerization. After 10 minutes a maximum temperature of 245 °C was recorded.

Example 16

A 30 ml serum cap bottle was charged with the catalyst of Example 1 (20 mg) and dried DCPD (10 ml) under a dry nitrogen blanket. Subsequently triethylsilane (0.15 ml) was added. The reactive mixture was placed in an oil bath of 90 °C resulting in an exothermic polymerization. After 5 minutes a maximum temperature of 180 °C was recorded.

Example 17

In rather the same way as described in examples 4 and 5 an experiment was carried out using the catalyst of example 1 (20 mg) and dried DCPD (10 ml) under a dry nitrogen blanket, whereas allyldimethylsilane (0.15 ml) was added. After 7 minutes a maximum temperature of 200 °C was recorded.

Example 18

In rather the same way as described in examples 4, 5 and 6 an experiment was carried out using the catalyst of example 1 (20 mg) and dried DCPD (10 ml) under a dry nitrogen blanket and subsequent addition of dimethylphenylsilane (0.15 ml) giving a maximum temperature of 220 °C after 11 minutes.

From particularly the examples 15, 16, 17 and 18 it will be appreciated that the starting mixtures all remained in form of a thin liquid at ambient temperature and that the polymerization only occurred upon heating, which has to be regarded as advantageous over the prior art processes.

## Claims

1. A process for the polymerization of dicyclopentadiene which process comprises contacting dicyclopentadiene with a catalytic system which may be prepared by combining the following two components:-

component 1 - a tungsten compound obtainable by combining a tungsten halide with an optionally substituted phenol which is not substituted with a bulky alkyl group at the positions ortho with respect to the hydroxyl group, and

component 2 - one or more compounds of the general formula:

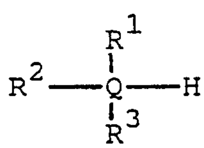

(I)

in which Q represents Sn or Si, in which $R^1$ , $R^2$ and $R^3$ each represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

2. A process according to claim 1, in which the catalytic system may be prepared by combining the following two components:

component 1′ - a tungsten compound obtainable by combining a tungsten halide with a para-trihalomethylphenol, the phenyl nucleus optionally being substituted by an alkyl group or halogen atom, and

component 2′ - one or more compounds of the general formula:

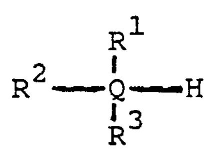

(II)

in which Q represents Sn or Si, in which $R^1$ , $R^2$ and $R^3$ may represent an optionally substituted alkyl group

having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

3. A process according to claim 1, characterized in that dicylopentadiene, optionally blended with other related cycloalkadiene or cycloalkene monomers, is polymerized.

4. A process according to any one of the claims 1-3, characterized in that dicylopentadiene, blended with other related cycloalkadiene or cycloalkene comonomers in an amount of less than 50% by weight of the comonomers, calculated on dicyclopentadiene, is copolymerized.

5. A process according to any one of the claims 1-4, characterized in that as tungsten halide for the preparation of component 1 tungsten hexachloride or tungsten oxytetrachloride is used.

6. A process according to claim 1, in which the phenol is a monocyclic halophenol in which the halogen atoms are attached to the aromatic nucleus in combination with a Sn compound.

7. A process as claimed in claim 6, in which the halophenol is a fluorophenol.

8. A process as claimed in claim 7, in which the fluorophenol is a polyfluorophenol.

9. A process as claimed in claim 8, in which the aromatic nucleus in the polyfluorophenol carries four fluorine atoms.

10. A process as claimed in claim 9, in which the polyfluorophenol is 2,3,5,6-tetrafluorophenol.

11. A process as claimed in claim 8, in which the polyfluorophenol is pentafluorophenol.

12. A process according to any one of the claims 1-5, characterized in that the para-trihalomethylphenol to be used in component 1′ is selected from ortho-chloro-para-trifluoromethylphenol, ortho-methyl-para-trichloromethylphenol, ortho-methyl-para-trifluoromethylphenol, para-tribromomethylphenol, para-trichloromethylphenol or para-trifluoromethylphenol, or mixtures thereof.

13. A process according to claim 12, characterized in that para-trifluoromethylphenol is used.

14. A process according to any one of the claims 1-13, characterized in that the complete component 1 is prepared in dicyclopentadiene as solvent.

15. A process according to any one of the claims 1-14, characterized in that a dicyclopentadiene containing mixture with other comonomers is used as solvent.

16. A process as claimed in any one of the preceding claims 1-15, in which $R^1$ , $R^2$ and $R^3$ in the general formula I each represent an alkyl group having in the range of from 2 to 4 carbon atoms or phenyl.

17. A process as claimed in claim 16, in which the compound of the general formula I is tributyltinhydride.

18. A process according to any one of the claims 1-17, characterized in that the molar ratio between the phenol compound and the tungsten halide is in the range of from 1:1 to 6:1.

19. A process according to claim 18, characterized in that the molar ratio between the phenol compound and the tungsten halide is in the range of from 3:2 to 3:1.

20. A process according to claim 2, characterized in that component 2′ is a compound of the general formula II in which at least two of the symbols $R^1$ , $R^2$ and $R^3$ represent an alkyl group having in the range of from 2 to 4 carbon atoms or phenyl, when Q represents silicon.

21. A process according to claim 2, characterized in that component 2′ is a compound of the general formula I, in which the symbols $R^1$ , $R^2$ and $R^3$ represent an alkyl group having in the range of from 2 to 4 carbon atoms, or a phenyl group, when Q represents tin.

22. A process according to claim 2, characterized in that as component 2 tributyltinhydride, triethylsilane and/or triphenylsilane are used.

23. A process according to any one of the claims 1-22, characterized in that the molar ratio between the tungsten compounds and cycloalkadiene monomer is in the range of from 1:20,000 to 1:100 and more preferably 1:1000 to 1:10,000.

24. A process according to any one of the claims 1-23, characterized in that the molar ratio of tin compound and/or optional silicon compound and the tungsten compound is in the range of from 15:1 to 1:1 and more preferably 12:1 to 3:1.

25. A process as claimed in any one of the preceding claims in which at least one of the components 1 and 2 is admixed with dicyclopentadiene prior to the polymerization.

26. A process as claimed in any one of the preceding claims in which the polymerization takes place in bulk.

27. A process as claimed in claim 26 in which both streams contain dicyclopentadiene and, after both streams have been contacted with each other, the resulting mixture is injected or poured into a mould where polymerization of the dicyclopentadiene takes place.

28. A catalyst system for the polymerization of norbornene derivatives, obtainable by combination of the following two components:

component 1 - a tungsten compound obtainable by combining a tungsten halide with an optionally substituted phenol which is not substituted with a bulky alkyl group at the positions ortho with respect to the hydroxyl group, and

component 2 - one or more compounds of the general formula:

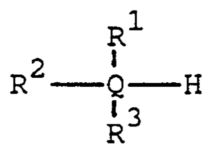

(I)

in which Q represents Sn or Si, in which $R^1$ , $R^2$ and $R^3$ each represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

29. A catalyst system for the polymerization of norbornene derivatives, obtainable by combination of the following two components:-

component 1′- a tungsten compound obtainable by combining a tungsten halide with a para-trihalomethylphenol, the phenyl nucleus optionally being substituted by an alkyl group or halogen atom, and

component 2′- one or more compounds of the general formula:

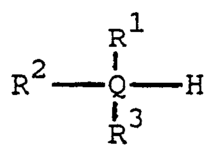

(II)

in which Q represents Sn or Si, in which $R^1$ , $R^2$ and $R^3$ may represent an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group and in which $R^1$ and $R^2$ each may also represent hydrogen.

30. A catalyst system according to claims 28 and 29, characterized in that as component 1 tungsten hexachloride or tungsten oxytetrachloride is included.

31. A catalyst system according to claims 29 and 30, characterized in that the para-trihalophenylphenol to be used in component 1 is selected from ortho-chloro-para-trifluoromethylphenol, ortho- methyl-para-trichloromethylphenol, ortho-methyl-para-trifluoromethylphenol, para-tribromomethylphenol, para-trichloromethylphenol or para-trifluoromethylphenol or mixtures thereof.

32. A catalyst system according to claims 29-31, characterized in that para-trifluoromethylphenol is used in component 1′.

33. A catalyst system according to any one of the claims 28-32, characterized in that the molar ratio between the para-trihalomethylphenol and the tungsten halide is in the range of 1:1 to 6:1 and more preferably 3:2 to 3:1.

34. A catalyst system according to any one of the claims 28-33, characterized in that the molar ratio between the tin and/or the silicon compound of the general formula I to the tungsten compound is in the range of from 15:1 to 1:1 and preferably 12:1 to 3:1.

35. Polymers of norbornene derivatives and more particularly of dicyclopentadiene optionally blended with other related cycloalkadiene or cycloalkene comonomers, obtained by the process according to any one of the claims 1-27.

36. A shaped article whenever comprising polymers of norbornene derivatives and more preferably of dicylopentadiene, optionally blended with other related cycloalkadiene or cycloalkene comonomers, obtained by the process according to any one of the claims 1-27.